# EUROPEAN PATENT APPLICATION

(11) **EP 4 378 894 A1**
(43) Date of publication of application: **05.06.2024**
(21) Application number: 22849456.3
(22) Date of filing: 26.07.2022
(51) Int. Cl.: C01G 23/00, C08L 101/00, C08K 3/22

(54) **STRONTIUM TITANATE FINE-PARTICLE POWDER AND METHOD FOR PRODUCING SAME, DISPERSION, AND RESIN COMPOSITION**

(30) Priority: 30.07.2021 JP 2021126218
(71) Applicant: Toda Kogyo Corp., Hiroshima-shi, Hiroshima 732-0828 (JP)
(72) Inventor: KAWAGUCHI, Takamoto, Otake-shi, Hiroshima 739-0652 (JP); TAMARI, Kousaku, Otake-shi, Hiroshima 739-0652 (JP); NAKATA, Kenichi, Otake-shi, Hiroshima 739-0652 (JP); UEMOTO, Shinji, Otake-shi, Hiroshima 739-0652 (JP); OSHIMO, Shiori, Otake-shi, Hiroshima 739-0652 (JP); KAWAI, Yoshiki, Otake-shi, Hiroshima 739-0652 (JP); MISHIMA, Yuji, Sanyoonoda-shi Yamaguchi 756-0847 (JP); KANEMITSU, Masahiro, Sanyoonoda-shi Yamaguchi 756-0847 (JP)
(74) Representative: Puschmann Borchert Kaiser Klettner Patentanwälte Partnerschaft mbB
(86) International application number: PCT/JP2022/028678
(87) International publication number: WO 2023/008395

(57) **Abstract**

The present disclosure is a spherical strontium titanate fine particulate powder with a primary particle having an average primary particle size equal to or less than 50 nm, the spherical strontium titanate fine particulate powder having a ratio between the average primary particle size and a BET-converted particle size ranging from 0.85 to 1.25, the BET-converted particle size derived from a BET specific surface area by using the expression 6000/(BET x 5.13).

## Description

### TECHNICAL FIELD

The present disclosure is directed to obtaining a strontium titanate fine particulate powder that is suitable for a filler.

### BACKGROUND ART

In recent years, as various electronic devices are reduced in size and weight, and have improved performance, there is an increasing need for an organic-inorganic hybrid material having the functionality of an inorganic filler (refractive index, dielectric constant, electrical conductivity, magnetism, thermal conductivity, etc.) while maintaining the processability of an organic resin.

For example, brightness enhancing films used in displays, and diffractive optical elements used in AR/MR glasses, etc., require a high refractive index that cannot be reached by a resin alone, in order to achieve properties such as higher brightness, thinner film, and improved viewing angles. For that reason, it is contemplated that an inorganic filler having a high refractive index is added to a resin to improve the refractive index of a resin film.

Also, as electronic components are reduced in weight and downsized, and have improved performance, there has been active development to use, as an insulating film of, for example, a thin film transistor (TFT), a resin composition of a resin and a high dielectric inorganic filler for easy pattern formation, instead of an inorganic material, such as silicon nitride.

Properties required for such inorganic filler in the hybrid material include an increased filling rate, uniform dispersion, and reduction in degradation of a resin film caused by hybridization. As the filler that satisfies such properties, fine spherical particles having a good particle size distribution are suitable for the increased filling rate, and particles having reduced particle defects are suitable for the uniform dispersion and the reduction in degradation of a resin film.

On the other hand, strontium titanate is a high-performance material having a perovskite structure, and is used in various applications as a single component. For example, it is used in optical applications, such as a pigment, a reflective material, and a light collecting material, by utilizing its high refractive index, in ceramic capacitor applications due to its high dielectric constant, and further in a visible light photocatalyst by utilizing that it has photocatalytic activity. It is also used in, for example, a semiconductor, a semiconductor capacitor, a thermoelectric material, EL, and a light emitting material by utilizing that addition of another element allows it to be semiconducting.

By forming a composite of such high-performance strontium titanate and resin, it is expected that a new material having functionality unachievable with resin alone can be produced.

There have previously been various reports on strontium titanate fine particles (Patent literatures 1 to 9, and Non-patent literature 1).

### CITATION LIST

### PATENT LITERATURE

[Patent Literature 1] Japanese Laid-Open Patent Publication No. H06-48734
[Patent Literature 2] Japanese Laid-Open Patent Publication No. H05-58633
[Patent Literature 3] Japanese Laid-Open Patent Publication No. 2003-277054
[Patent Literature 4] Japanese Laid-Open Patent Publication No. 2015-137208
[Patent Literature 5] Japanese Laid-Open Patent Publication No. 2018-20919
[Patent Literature 6] Japanese Laid-Open Patent Publication No. 2019-151507
[Patent Literature 7] Japanese Laid-Open Patent Publication No. 2016-69211
[Patent Literature 8] Japanese Laid-Open Patent Publication No. 2015-151304
[Patent Literature 9] International Patent Publication No. WO2015/152237

### NON-PATENT LITERATURE

[Non-patent Literature 1] Ceramics International (2015), 41, 13516-13524

### SUMMARY OF INVENTION

### TECHNICAL PROBLEM

On the contrary, a strontium titanate fine particulate powder suitable for the filler as described above, although currently strongly needed, has not been obtained yet.

More specifically, the foregoing Patent Literature 1 describes a method for producing a strontium titanate fine particulate powder having an average particle size equal to or less than 0.05 µm, which however does not consider particle defects of the resulting strontium titanate. In addition, this method requires an inline mixer for instantly, uniformly mixing reactants, which makes the process complicated and industrially undesirable.

The foregoing Patent Literature 2 then describes a manufacturing method for obtaining strontium titanate by subjecting a hydrolysis product of a titanium compound, and a strontium compound, to a wet reaction in the presence of hydrogen peroxide. Such strontium titanate then has a large average particle size greater than or equal to 0.1 µm, and this method is also uneconomical as a greater amount of hydrogen peroxide is used.

Also, the foregoing Patent Literatures 3 and 4 describe obtaining a fine particle of strontium titanate by reacting a hydrolysis product of a titanium compound, and a water-soluble strontium salt, in a strong alkali solution, and such fine particle of strontium titanate however has a cuboid or cube shape and is not suitable for a filler. Particle defects are then not considered, and it is more likely there are many particle defects based on a ratio of a primary particle size and a BETconverted particle size described in the examples.

Also, the foregoing Patent Literatures 5 and 6 describe obtaining spherical strontium titanate by adding a hydroxycarboxylic acid or a third component to a hydrolysis product of a titanium compound, and a water-soluble strontium salt, to react in a strong alkali solution. Such strontium titanate then has properties that may vary due to the addition of hydroxycarboxylic acid or the other element, and is not suitable for a filler to impart the property of strontium titanate alone. Particle defects are then not considered, and it is more likely there are many particle defects based on a ratio of a primary particle size and a BET-converted particle size described in the examples.

Also, the foregoing Patent Literatures 7 and 8 describe cube-shaped strontium titanate having a good photocatalytic property, and such strontium titanate has a controlled cube shape for exerting catalytic functions, and is not suitable for resin filler applications.

Also, the foregoing Patent Literature 9 describes spherical strontium titanate having an average particle size of 50 to 150 nm by means of a wet reaction, and such strontium titanate has a large average particle size greater than or equal to 50 nm to be unable to have adhesion to a resin, and is thus less likely to be a preferable filler. Particle defects are then not considered, and it is more likely there are many particle defects based on a ratio of a primary particle size and a BET-converted particle size described in the examples.

The foregoing Patent Literature 1 also reports cube-shaped strontium titanate having a primary particle size of 32 to 45 nm. In this respect, such strontium titanate has a cube particle shape to be unable to increase a filling rate, and thus is not suitable for a filler.

The present disclosure thus has an objective to produce a strontium titanate fine particle that is suitable for a filler in a composite material.

### SOLUTION TO PROBLEM

The objective can be achieved by the present disclosure as follows.

Specifically, the present disclosure is directed to a spherical strontium titanate fine particulate powder with a primary particle having an average primary particle size equal to or less than 50 nm, the spherical strontium titanate fine particulate powder having a ratio between the average primary particle size and a BET-converted particle size ranging from 0.85 to 1.25, the BETconverted particle size derived from a BET specific surface area value by using the expression 6000/(BET x 5.13) (present disclosure 1).

The spherical strontium titanate fine particulate powder according to the present disclosure has reduced particle defects and can decrease elution of Sr when combined with a resin.

The present disclosure is also directed to the strontium titanate fine particulate powder according to the present disclosure 1, having a circularity greater than or equal to 0.8 (present disclosure 2).

In this way, the filling property can be improved.

The present disclosure is also directed to a dispersion containing a strontium titanate fine particulate powder according to the present disclosure 1 or 2 (present disclosure 3).

The strontium titanate fine particle is suitable for a filler and enables processing and development for various applications.

The present disclosure is also directed to a resin composition containing a strontium titanate fine particulate powder according to the present disclosure 1 or 2, and a resin (present disclosure 4).

The resin composition can be formed as a resin composition having functionality.

### ADVANTAGEOUS EFFECTS OF INVENTION

The strontium titanate fine particulate powder according to the present disclosure is fine and has reduced particle defects, and hence can decrease elution of Sr. Thus, it can reduce degradation of a film formed from a composite using the strontium titanate fine particulate powder, and is suitable for a filler in an organic-inorganic hybrid material.

### DESCRIPTION OF EMBODIMENTS

An embodiment of the present disclosure is described in detail as follows.

The strontium titanate fine particulate powder according to the present disclosure is a spherical particle with a primary particle having an average primary particle size equal to or less than 50 nm, a ratio between the average primary particle size and a BET-converted particle size ranging from 0.85 to 1.25, the BETconverted particle size calculated by using the following expression. The expression: 6000/(BET x 5.13).

The strontium titanate fine particulate powder according to the present disclosure has a primary particle having an average primary particle size equal to or less than 50 nm. The average primary particle size is controlled in the foregoing range so that the strontium titanate fine particulate powder can be homogeneously dispersed in a resin film. The average primary particle size is preferably equal to or less than 45 nm, more preferably equal to or less than 40 nm. The lower limit value is about 8 nm.

The ratio between the average primary particle size and the BET-converted particle size of the strontium titanate fine particulate powder according to the present disclosure (average primary particle size/BET-converted particle size) is from 0.85 to 1.25. The ratio is controlled in the foregoing range so that the strontium titanate fine particulate powder can have reduced particle defects and a narrow particle size distribution. When the value of the ratio is less than 0.85, the BET specific surface area is smaller with respect to the average particle size, and thus there are many coarse particles to cause a poor distribution. When the value of the ratio is greater than 1.25, the BET specific surface area is larger with respect to the average particle size, and there are more defects in the particles. The range is preferably from 0.88 to 1.23, more preferably from 0.90 to 1.20.

The strontium titanate fine particulate powder according to the present disclosure preferably has a BET specific surface area greater than or equal to 23.4 m²/g. When the BET specific surface area is less than 23.4 m²/g, the average particle size of the strontium titanate fine particulate powder is greater than 50 nm. The BET specific surface area is more preferably greater than or equal to 30.0 m²/g, even more preferably greater than or equal to 35 m²/g. The upper limit value of the BET specific surface area is about 120 m²/g.

The strontium titanate fine particulate powder according to the present disclosure has a BET-converted particle size preferably equal to or less than 58.8 nm, more preferably equal to or less than 50.0 nm. The BET-converted particle size is then evaluated by using a method as described in the following.

The strontium titanate fine particulate powder according to the present disclosure has a spherical particle shape, and preferably has a circularity greater than or equal to 0.8. When the circularity of the strontium titanate fine particle is less than 0.8, its shape may be, for example, cuboid and the packing density may be reduced. The circularity is more preferably greater than or equal to 0.82, even more preferably from 0.83 to 1.0. The circularity is then evaluated by using a method as described in the following.

The strontium titanate fine particulate powder according to the present disclosure preferably has an Sr/Ti ratio of from 0.90 to 1.10. The Sr/Ti ratio is controlled in the foregoing range so that certain properties of the strontium titanate can be exerted. The Sr/Ti ratio is more preferably from 0.95 to 1.05, even more preferably from 0.98 to 1.02.

The strontium titanate fine particulate powder according to the present disclosure preferably has an Sr elution concentration equal to or less than 500 ppm. When the Sr elution concentration is greater than 500 ppm, the eluted Sr accelerates degradation of a resin film as the composite film is produced. The Sr elution concentration is more preferably equal to or less than 400 ppm, even more preferably from 100 ppm to 350 ppm.

Next, a method for producing a strontium titanate fine particulate powder according to the present disclosure is described.

The strontium titanate fine particulate powder according to the present disclosure can be obtained by neutralizing a titanium tetrachloride solution with a strontium hydroxide solution to acquire a slurry of hydrous titanium hydroxide (neutralization reaction), heating the slurry of hydrous titanium hydroxide before washing it with water, and adding it to a strontium hydroxide solution to subject to a wet reaction in a temperature range of from 60 °C to 200 °C.

The ratio of the titanium raw material and the alkaline solution (Sr/Ti) when added for the neutralization reaction is preferably from 1.1 to 1.8. The ratio less than 1.1 results in reduction in the production yield of strontium titanate core particles and the ratio greater than 1.8 results in a poor distribution of the primary particle of the strontium titanate. The ratio is more preferably from 1.25 to 1.65.

After the neutralization reaction, as CM (electrical conductivity) after washing the resulting hydrous titanium hydroxide colloid with water, the CM of the colloidal slurry is preferably equal to or less than 10 mS/cm, more preferably equal to or less than 8 mS/cm.

The reaction solution for producing the strontium titanate fine particle preferably has a pH of from 11 to 13.5, and a temperature range of from 60 °C to 300 °C.

The reaction solution for producing the strontium titanate fine particle preferably has a reaction concentration of from 0.05 mol/L to 0.7 mol/L converted with respect to the titanium compound. The reaction concentration less than 0.05 mol/L results in a low yield and being unsuitable for industrial applications, and the reaction concentration greater than or equal to 0.7 mol/L results in precipitation of Sr(OH)₂ because the amount of strontium hydroxide in the reaction solution exceeds its solubility, and in making it difficult to perform a homogeneous liquid phase reaction.

After the neutralization reaction, a strontium hydroxide solution is added. The amount of the strontium hydroxide solution that is added is determined with respect to Ti in the reaction solution such that the Sr/Ti ratio is from 1.5 to 3.0.

A nitrogen flow during the reaction is preferably used to control to prevent the strontium compound and carbon dioxide, etc., in the air from reacting.

The reaction temperature of the wet reaction is preferably 60 °C to 300 °C. When the reaction temperature is less than 60 °C, it is difficult to obtain dense spherical strontium titanate fine particles. When the reaction temperature is greater than 300 °C, it is difficult to design a hydrothermal container. The reaction temperature is preferably 65 °C to 250 °C.

The particles after the wet reaction are washed with water and dried according to a conventional method. The washing with water can wash excessive strontium away. It also can remove impurities, such as Na, K, and Cl, concomitantly.

In the present disclosure, the reaction concentration, the Sr/Ti ratio for the neutralization, and the Sr/ Ti ratio for the wet reaction are controlled so that a desired strontium titanate fine particulate powder can be obtained.

In the present disclosure, pulverization and disintegration may also be performed.

The present disclosure can be directed to a dispersion containing the strontium titanate.

Also, any of an aqueous and solvent dispersion medium can be used as a dispersion medium in the present disclosure.

The dispersion medium for an aqueous dispersion includes water, or alcohol solvents, such as methyl alcohol, ethyl alcohol, propyl alcohol, isopropyl alcohol, and butyl alcohol; glycol ether solvents, such as methyl cellosolve, ethyl cellosolve, propyl cellosolve, and butyl cellosolve; oxyethylene or oxypropylene addition polymers, such as diethylene glycol, triethylene glycol, polyethylene glycol, dipropylene glycol, tripropylene glycol, polypropylene glycol; alkylene glycols, such as ethylene glycol, propylene glycol, 1,2,6-hexanetriol; and water-soluble organic solvents, such as glycerin, and 2-pyrrolidone. One or more of those dispersion media for the aqueous dispersion can be combined and used according to intended applications.

The dispersion medium for a solvent dispersion includes, for example, aromatic hydrocarbons, such as toluene, and xylene; ketones, such as methyl ethyl ketone and cyclohexanone; amides, such as N,N-dimethylformamide, N,N-dimethylacetamide, and N-methyl pyrrolidone; ether alcohols, such as ethylene glycol monomethyl ether, ethylene glycol monoethyl ether, diethylene glycol monomethyl ether, propylene glycol monomethyl ether, and propylene glycol monoethyl ether; ether acetates, such as ethylene glycol monomethyl ether acetate, ethylene glycol monoethyl ether acetate, propylene glycol monomethyl ether acetate, and propylene glycol monoethyl ether acetate; acetic esters, such as ethyl acetate, butyl acetate, and isobutyl acetate lactic acid esters, such as methyl lactate ester, ethyl lactate ester, and propyl lactate ester; cyclic esters, such as ethylene carbonate, propylene carbonate, and γ-butyrolactone; and various monomers. One or more of those dispersion media for the solvent dispersion can be combined and used according to intended applications.

The concentration of the strontium titanate fine particulate powder in the dispersion according to the present disclosure is preferably adjusted from 5% by weight to 60% by weight. The concentration less than 5% by weight results in reduced productivity as applied in a next process and the concentration greater than 60% by weight results in being less likely to provide a highly flowable slurry. The concentration is more preferably from 10% by weight to 55% by weight, even more preferably from 15% by weight to 50% by weight.

For example, a dispersant, and an additive (such as a resin, defoamer, auxiliary agent) can also be added to the dispersion according to the present disclosure, as necessary. The dispersant in the present disclosure can be appropriately selected and used according to the strontium titanate fine particulate powder and the type of the dispersion medium used. The dispersant may include, for example, organic silicon compounds, such as alkoxysilane, silane coupling agents, and organopolysiloxane; organic titanium compounds, such as titanate coupling agents; organic aluminum compounds, such as aluminate coupling agents; organic zirconium compounds, such as zirconate coupling agents; a surfactant; or a polymeric dispersant. One or more of those dispersants can be combined and used.

The organic silicon compound may include, for example, silane coupling agents, such as methyltrimethoxysilane, methyltriethoxysilane, dimethyldiethoxysilane, phenyltriethoxysilane, ethyltriethoxysilane, propyltriethoxysilane, butyltriethoxysilane, hexyltriethoxysilane, octyltriethoxysilane, alkoxysilane such as tetraethoxysilane and tetramethoxysilane, vinyltrimethoxysilane, vinyltriethoxysilane, γ-aminopropyltriethoxysilane, γ-glycidoxypropyltrimethoxysilane, γ-mercaptopropyltrimethoxysilane, γ-methacryloyloxypropyltrimethoxysilane, N-(β-aminoethyl)-γ-aminopropyltrimethoxysilane, γ-glycidoxypropylmethyldimethoxysilane, and γ-chloropropyltrimethoxysilane; and organopolysiloxane, such as polysiloxane, methyl hydrogen polysiloxane, and modified polysiloxane.

The organic titanium compound may include, for example, isopropyl triisostearoyl titanate, isopropyl tris(dioctylpyrophosphate)titanate, bis(dioctylpyrophosphate)oxyacetate titanate, isopropyltri(N-aminoethyl-aminoethyl) titanate, tris(dioctylpyrophosphate)ethylene titanate, isopropyl dioctylpyrophosphate titanate, isopropyl tris(dodecylbenzenesulfonyl) titanate, titanium tetra normal butoxide, titanium tetra-2-ethylhexoxide, tetraisopropyl bis(dioctylphosphite) titanate, tetraoctyl bis(ditridecylphosphite)titanate, tetra(2,2-diallyloxymethyl-1-butyl)bis(ditridecyl)phosphite titanate, tetraoctyl bis(ditridecylphosphate)titanate, tetra(2-2-diallyloxymethyl-1-butyl)bis(ditridecyl)phosphate titanate, bis(dioctylpyrophosphate)oxyacetate titanate, and bis(dioctylpyrophosphate)ethylene titanate.

The organic aluminum compound may include, for example, acetoalkoxyaluminum diisopropylate, aluminum diisopropoxy monoethylacetoacetate, aluminum trisethylacetoacetate, and aluminum trisacetylacetonate.

The organic zirconium compound may include, for example, zirconium tetrakis acetylacetonate, zirconium dibutoxy bisacetylacetonate, zirconium tetrakis ethylacetoacetate, zirconium tributoxy monoethyl acetoacetate, and zirconium tributoxy acetylacetonate.

The surfactant may include anionic surfactants, such as fatty acid salts, sulfuric acid ester salts, sulfonic acid salts, and phosphoric acid ester salts; nonionic surfactants, for example, polyethylene glycol nonionic surfactants, such as polyoxyethylene alkyl ether, polyoxyethylene aryl ether, and polyhydric alcohol nonionic surfactants, such as sorbitan fatty acid ester; cationic surfactants, such as amine salt cationic surfactants and quaternary ammonium salt cationic surfactants; and amphoteric surfactants, for example, alkyl betaine such as alkyldimethyl aminoacetic acid betaine, and alkyl imidazoline.

The polymeric dispersant may include, for example, styrene-acrylic acid copolymers, styrene-maleic acid copolymers, and polycarboxylic acid and salts thereof.

The amount of the dispersant that is added may depend on the total surface area of the strontium titanate fine particulate powder in the dispersion, and may be appropriately prepared according to the intended application of the dispersion of the strontium titanate fine particulate powder, and the type of the dispersant. Generally, from 0.01% by weight to 100% by weight of the dispersant is added with respect to the strontium titanate fine particulate powder in the dispersion medium so that the strontium titanate fine particulate powder can be homogeneously, finely dispersed in the dispersion medium and the dispersion stability can be improved. Additionally, not only is the dispersant directly added to the dispersion medium, but also the strontium titanate fine particulate powder may be pretreated with the dispersant.

The present disclosure is directed to a resin composition containing a strontium titanate fine particle in a resin.

The resin used may include, but not particularly limited to, for example, acrylic resins, polycarbonate, polystyrene resins, polyester resins, polyimide resins, polymethyl methacrylate (PMMA), AS resins, silicone resins, and fluororesin.

### EXAMPLES

A representative embodiment of the present disclosure is described as follows.

By using a photograph (25k) of the strontium titanate fine particulate powder observed with a transmission electron microscope (JEM-F200, Japan Electron Optics Laboratory Company), the average primary particle size was measured from about 300 particles. In this regard, the average primary particle size is a particle size determined by obtaining, as each particle size, the diameter of a circle having an area equivalent to the area determined for each particle from the photograph, and by averaging the diameters of all particles measured. The particle shape was then determined from the photograph by the electron microscope. Further, the circularity was expressed as (4π x area)/perimeter² by using the measured particles from the photograph by the electron microscope.

A value of the specific surface area (m²/g) was expressed as a value measured by using BET method. The BETconverted particle size (nm) was calculated by using the expression 6000/(BET specific surface area x 5.13). The density of strontium titanate (g/cm³) is then 5.13.

A ratio is calculated from the average primary particle size and the BET-converted particle size (average primary particle size/BET-converted particle size).

The stability of a composite film is evaluated by using the Sr elution concentration. The Sr elution concentration was determined by adding 2.5 g of strontium titanate fine particles to 50 ml of pure water, boiling it for 10 minutes before cooling to room temperature and filtering, and measuring the amount of Sr in the filtrate.

The Sr/Ti ratio was measured by using an X-ray fluorescence analyzer (ZSX Primus II, Rigaku).

### Example 1

A solution was obtained by mixing a titanium tetrachloride solution with water to have a Ti molar concentration of 2.10 mol/l, and a 20 wt.% strontium hydroxide solution was added to said solution to have a Sr/Ti molar ratio of 1.37, and a slurry of titanium hydroxide was obtained. The slurry was washed with water to have a CM (electrical conductivity) equal to or less than 10 mS/cm. The resulting slurry of titanium hydroxide was introduced into a strontium hydroxide solution that had been previously dissolved in a reaction vessel. This strontium hydroxide solution was adjusted to have a Sr/Ti molar ratio of 1.8. Also, the concentration during the reaction was at a strontium titanate concentration of 0.22 mol/l. A hydrothermal reaction was then performed with continued stirring at 180°C for 8 hours. After the reaction, the cooling to room temperature was conducted, a nutsche was then used to wash with water until the electrical conductivity of the filtrate was equal to or less than 200 µS/cm, to filter, and to dry, and a white powder of strontium titanate fine particles was obtained.

When observed by the electron microscope, the resulting strontium titanate fine particulate powder was spherical particles having an average primary particle size of 22.7 nm and a circularity of 0.84, the BET specific surface area was 54.1 m²/g, and the ratio between the primary particle size and the BET-converted particle size was 1.05.

### Examples 2 to 6

The same procedure as in Example 1 was conducted for obtaining strontium titanate fine particulate powders, except varying the reaction concentration, amount of strontium hydroxide for neutralization and crystallization, reaction temperature, and time.

Conditions for production in the procedure are shown in Table 1, and powder properties of resulting strontium titanate are shown in Table 2.

### Comparative Example 1

The production was performed by using Example 19 of Patent literature 1 as reference. That is, a titanium tetrachloride solution was added to pure water to stir for 1 hour. 5% ammonia water was added dropwise to this solution to obtain a white slurry with a pH of 7.8. This slurry was filtered, washed with water, then re-slurried, heated to 60°C, and subjected to an aging reaction at pH 6.0 for 40 minutes after adding acetic acid. After the aging reaction, it was filtered and washed with water to obtain a cake of hydrous titanium hydroxide gel. A slurry boiled after adding pure water to this hydrous titanium hydroxide gel cake, and a strontium hydroxide solution were adjusted to have an Sr/Ti ratio of 1.2, mixed through an inline mixer, and circulated at 80°C for 4 hours to subject to an aging reaction. After the aging reaction, the slurry was filtered, washed with water, and dried.

**Table 1**

| | Reaction concentration | Neutralization reaction Sr/Ti | Wet reaction Sr/Ti | Reaction temperature | Reaction time |
|---|---|---|---|---|---|
| | [mol/l] | [mol ratio] | [mol ratio] | [°C] | [hr] |
| Example 1 | 0.22 | 1.37 | 1.8 | 180 | 8 |
| Example 2 | 0.22 | 1.6 | 1.5 | 180 | 12 |
| Example 3 | 0.32 | 1.6 | 1.5 | 200 | 12 |
| Example 4 | 0.22 | 1.37 | 3 | 160 | 8 |
| Example 5 | 0.28 | 1.32 | 1.8 | 150 | 8 |
| Example 6 | 0.28 | 1.32 | 1.8 | 85 | 3 |
| Comparative Example 1 | Example 19 in JPH6-48734 | | | | |

**Table 2**

| | Average primary particle size | BET | BET-converted particle size | Average primary particle size/BET-converted particle size | Shape | Circularity | Sr/Ti | Sr elution concentration |
|---|---|---|---|---|---|---|---|---|
| | [nm] | [m²/g] | [nm] | | | [-] | [mol ratio] | [ppm] |
| Example 1 | 22.7 | 54.1 | 21.6 | 1.05 | spherical | 0.84 | 1.002 | 223 |
| Example 2 | 42.1 | 34.3 | 34.1 | 1.23 | spherical | 0.88 | 0.995 | 216 |
| Example 3 | 39.0 | 31.8 | 36.8 | 1.06 | spherical | 0.87 | 1.005 | 204 |
| Example 4 | 17.0 | 61.2 | 19.1 | 0.89 | spherical | 0.91 | 0.997 | 232 |
| Example 5 | 15.9 | 67.6 | 17.3 | 0.92 | spherical | 0.86 | 0.998 | 287 |
| Example 6 | 12.5 | 105.3 | 11.1 | 1.13 | spherical | 0.89 | 1.009 | 315 |
| Comparative Example 1 | 29.4 | 50 | 23.4 | 1.26 | spherical | 0.85 | 1.007 | 609 |

The Sr elution concentrations in the examples are as low as less than or equal to 500 ppm. Thus, the strontium titanate fine particles in the examples enable production of a stable composite without degrading a film when used as a filler to mix and knead with a resin. This is because the ratio between the primary particle size and the BET-converted particle size correlates with the Sr elution concentration, that is, the strontium titanate fine particles having reduced defects are obtained in the examples.

### INDUSTRIAL APPLICABILITY

The strontium titanate fine particulate powder according to the present disclosure is characterized by the ability to have a controlled average particle size according to its purpose, and to be fine and spherical, and have reduced defects, so that degradation of a film is reduced and an increase in the packing density of a filler is facilitated. Thus, the strontium titanate fine particulate powder according to the present disclosure is suitable for a high refractive inorganic filler for increasing a refractive index of a resin composition utilized for brightness enhancing films in displays, and diffractive optical elements in AR/MR glasses, etc., or a high dielectric inorganic filler for a high dielectric resin composition that can be utilized for electronic components, such as a thin film transistor (TFT).

## Claims

1. A strontium titanate fine particulate powder having a spherical shape, and a primary particle having an average primary particle size equal to or less than 50 nm, the strontium titanate fine particulate powder having a ratio between the average primary particle size and a BETconverted particle size ranging from 0.85 to 1.25, the BET-converted particle size derived from a BET specific surface area by using the expression 6000/(BET x 5.13).

2. The strontium titanate fine particulate powder according to claim 1, having a circularity greater than or equal to 0.80.

3. A dispersion containing a strontium titanate fine particulate powder according to claim 1 or 2.

4. A resin composition containing a strontium titanate fine particulate powder according to claim 1 or 2, and a resin.
